Europäisches Patentamt

European Patent Office

Office européen des brevets

(11) Veröffentlichungsnummer: **0 144 305**

**A1**

## (12) EUROPÄISCHE PATENTANMELDUNG

(21) Anmeldenummer: **84890214.4**

(22) Anmeldetag: **13.11.84**

(51) Int. Cl.⁴: **C 02 F 3/12**
 **G 05 D 21/02**

(30) Priorität: **28.11.83 AT 4162/83**

(43) Veröffentlichungstag der Anmeldung:
 **12.06.85 Patentblatt 85/24**

(84) Benannte Vertragsstaaten:
 **CH DE FR IT LI SE**

(71) Anmelder: **VOEST-ALPINE Aktiengesellschaft**
 **Friedrichstrasse 4**
 **A-1011 Wien(AT)**

(72) Erfinder: **Stuckart, Wolfgang, Dipl.-Ing.**
 **Keinergasse 17/14**
 **A-1030 Wien(AT)**

(74) Vertreter: **Haffner, Thomas M., Dr. et al,**
 **Patentanwaltskanzlei Dipl.-Ing. Adolf Kretschmer Dr.**
 **Thomas M. Haffner Schottengasse 3a**
 **A-1014 Wien(AT)**

(54) **Verfahren zum Aufarbeiten von Prozesswasser aus einer thermischen Zersetzung von organischen Substanzen, sowie Vorrichtung zur Duchführung dieses Verfahrens.**

(57) Für die Aufarbeitung des Prozeßwassers aus einer thermischen Zersetzung von organischen Substanzen wird vorgeschlagen, dieses Prozeßwasser in einem gasdichten Sammelbehälter zwischenzuspeichern und einer biologischen Abwasserreinigungsstufe in Mengen zuzudosieren, welche der Nährstoffkonzentration des Abwassers umgekehrt proportional ist. Hiezu wird an die Prozeßwasserableitung (12) eines Konvertierungs- oder Pyrolysereaktors (9) ein gasdichter Sammelbehälter (13) angeschlossen, aus welchem über eine Leitung (14) und ein regelbares Dosierventil (19) Prozeßwasser der biologischen Abwasserreinigungsstufe (4) einer Abwasserreinigungsanlage zudosiert wird. Für die Regelung des Dosierventils (14) ist eine Regelschaltung (15) vorgesehen, welche mit Signalleitungen für die Meßwerte einer Konzentrationsbestimmung der Nährstoffkonzentration im zufließenden Abwasser und/oder den Signalleitungen von Trübungssensoren (16) im Vorklärbecken (1) verbunden ist.

EP 0 144 305 A1

Verfahren zum Aufarbeiten von Prozeßwasser aus einer thermischen Zersetzung von organischen Substanzen, sowie Vorrichtung zur Durchführung dieses Verfahrens

Die Erfindung bezieht sich auf ein Verfahren zum Aufarbeiten von Prozeßwasser aus einer thermischen Zersetzung von organischen Substanzen, insbesondere aus Pyrolyse- bzw. Konvertierungsanlagen, sowie auf eine Vorrichtung zur Durchführung dieses Verfahrens.

Es sind eine Reihe von Verfahren zur Schlamm- bzw. Müllentsorgung bekannt, bei welchen das Einsatzmaterial unter anaeroben Verhältnissen erhitzt wird, wobei eine wässerige Phase entsteht, welche das bei der Trocknung anfallende Brüdenkondensat und Destillationsprodukte enthält. Diese wässerige Phase, welche nachfolgend Prozeßwasser genannt wird, enthält in hohem Maße organische Substanzen, welche biologisch abbaubar sind, und weist einen relativ hohen biologischen Sauerstoffbedarf für seinen Abbau auf. Ein besonderer Nachteil bei der Aufarbeitung dieses Prozeßwassers ist dadurch gegeben, daß dieses Prozeßwasser eine starke Geruchsbelästigung darstellt. Der biologische Sauerstoffbedarf eines derartigen Prozeßwassers ist insbesondere dann sehr hoch, wenn es sich um wässerige Destillate handelt.

Bei sogenannten Mischkanalisationen, bei welchen Schmutzwasser und Regenwasser in ein und demselben Kanal befördert wird, schwankt naturgemäß der Kläranlagenzulauf mengenmäßig in Abhängigkeit von der Niederschlagsmenge. Abhängig von zeitlichen Faktoren, beispielsweise der tageszeitlich bedingten Spitze der Belastung des Abwassers zu bestimmten Zeiten und in Abhängigkeit von der Verdünnung des Schmutzwassers durch das Regenwasser, schwankt die Nährstoffkonzentration im Abwasser und damit auch ihr biologischer Sauerstoffbedarf.

- 2 -

Die Erfindung zielt nun darauf ab, das im Zuge der thermischen Zersetzung von organischen Substanzen entstehende Prozeßwasser mit einem Minimum an Geruchsbelästigung in besonders einfacher Weise aufzuarbeiten, ohne daß hiebei bestehende Anlagen in ihrem Aufbau oder in ihrer Dimensionierung nennenswert geändert werden müssen. Zur Lösung dieser Aufgabe besteht die Erfindung im wesentlichen darin, daß das Prozeßwasser einem gasdichten Sammelbehälter zugeführt wird und aus diesem Sammelbehälter einer biologischen Abwasserreinigungsstufe zudosiert wird. Insbesondere bei Abwasserreinigungsanlagen, bei welchen das Abwasser einer Mischkanalisation aufgearbeitet wird, kann durch das Zudosieren von Prozeßwasser der schwankende Nährstoffgehalt relativ weitgehend kompensiert werden und es kann zu Zeiten, zu welchen das aufzuarbeitende Abwasser relativ rein ist, durch Zudosieren von an organischen Substanzen reichem Prozeßwasser die biologische Abwasserreinigungsstufe auf relativ gleichförmigem Niveau betrieben werden.

In vorteilhafter Weise wird hiebei so vorgegangen, daß das Prozeßwasser in einer Menge, welche der Nährstoffkonzentration des Abwassers umgekehrt proportional ist, der biologischen Abwasserreinigungsstufe zudosiert wird. Als Maß für die Verunreinigung des zu reinigenden Abwassers können hiebei Trübungsmeßwerte oder chromatographische Bestimmungen des organischen Anteiles herangezogen werden. Bei einer Mischkanalisation läßt sich das Maß der Nährstoffkonzentration in besonders einfacher Weise unmittelbar aus dem Abwasseranfall ableiten. Wenn der Abwasserreinigungsanlage hohe Mengen an Abwasser zugeführt werden und der durchschnittliche Wert für die anfallende Abwassermenge bekannt ist, läßt sich aus der erhöhten Zufuhr an Abwasser bzw. der erhöhten Abwassermenge unmittelbar auf die Nährstoffkonzentration schließen. Ein hoher Mengenanfall bedeutet somit geringere Konzentration an Nährstoffen und durch Zudosieren von Prozeßwasser kann diese geringere Nährstoffkonzentration auf einen vorbestimmten Wert angehoben werden. Zu diesem Zwecke wird im Rahmen des erfindungsgemäßen Verfahrens so vorgegangen, daß in Abwasserreinigungsanlagen im Zuge einer Mischkanalisation die der Abwasserreinigungsanlage zufließende Abwassermenge gemessen wird und daß das Prozeßwasser in einer zur Zuflußmenge proportionalen Menge der biologischen Abwasserreinigungsstufe zudosiert wird. Eine unmittelbare Regelung der Dosierung der Prozeßwassermenge kann so erfolgen, daß die Prozeßwassermenge in Abhängigkeit von der der biologischen Abwasserreinigungsstufe in der Zeiteinheit zugeführten Abwassermenge geregelt wird.

Durch all diese Maßnahmen ist es möglich, die biologische Stufe, welche im besonderen mit Vorteil als aerobe biologische Reinigungsstufe ausgebildet ist, in ihren Dimensionen unverändert belassen. Bei hohen Mengen an anfallendem Prozeßwasser kann es jedoch günstig sein, die biologische Reinigungsstufe geringfügig zu vergrößern, wobei sich am Verfahrensablauf prinzipiell jedoch nichts ändert. Die Verdünnung der Prozeßwässer durch das Abwasser ist aufgrund der gewählten Abhängigkeit von der Nährstoffkonzentration immer relativ groß und im wesentlichen konstant, so daß die Geruchsbelästigung auf ein Minimum reduziert werden kann. Derartige Vorteile könnten mit einer konstanten Zudosierung von Prozeßwasser in keiner Weise erreicht werden, da dann zusätzlich zu den Konzentrationsschwankungen der Nährstoffe in den angelieferten Abwässern noch die relativ hohe und konstante Belastung durch die Prozeßwässer hinzukäme.

Zur Durchführung des erfindungsgemäßen Verfahrens ist die hiefür erforderliche Vorrichtung gemäß der Erfindung so ausgebildet, daß an die Prozeßwasserableitung eines Konvertierungs- oder Pyrolysereaktors ein gasdichter Sammelbehälter angeschlossen ist, daß der Sammelbehälter über eine Leitung unter Zwischenschaltung einer regelbaren Förderpumpe und/oder eines regelbaren Dosierventiles mit der Zuleitung zur

- 4 -

biologischen Reinigungsstufe einer Abwasserreinigungsanlage verbunden ist, daß in die Leitung zur biologischen Reinigungsstufe eine weitere Pumpe mit veränderlichem Fördervolumen und/oder ein Durchflußmengenmesser eingeschaltet ist und daß der Antrieb der Förderpumpe(n) und/oder der Durchflußmengenmesser und/oder der Stellantrieb des Dosierventils mit einer Regelschaltung verbunden sind. Durch den gasdichten Sammelbehälter kann hiebei die Geruchsbelästigung gering gehalten werden und es wird ein Pufferspeicher ausgebildet, aus welchem die jeweils gewünschte Menge an Prozeßwasser abgeleitet wird und entsprechend den Signalen der Regelschaltung der biologischen Reinigungsstufe zudosiert wird. Da das Prozeßwasser in der Regel aus einer thermischen Zersetzung des durch Eindicken und Entwässerung entstandenen Schlammkuchens aus dem Nachklärbecken der gleichen Abwasserreinigungsanlage entsteht, kann dieses Prozeßwasser im geschlossenen Kreislauf geführt werden und unmittelbar in derjenigen Anlage verarbeitet werden, in welcher auch der aufzuarbeitende Schlamm entsteht. Da mit Vorteil die Zudosierung zur biologischen Stufe der Abwasserreinigung so erfolgt, daß die Nährstoffkonzentration bei kontinuierlichem Beschicken der biologischen Abwasserreinigungsstufe konstant gehalten wird, ergeben sich verfahrenstechnisch Vorteile in Bezug auf die Ausbeuten der biologischen Umsetzung, da die Biozönose der biologischen Stufe in einfacher Weise in einem konstanten Milieu gehalten wird.

Zusätzlich zu der mit Vorteil auf eine Durchflußmengenmessung gestützten Regelung kann die erfindungsgemäße Vorrichtung mit Vorteil so weitergebildet werden, daß die Regelschaltung mit Signalleitungen für die Meßwerte einer Konzentrationsbestimmung der Nährstoffkonzentration im zufließenden Abwasser und/oder den Signalleitungen von Trübungssensoren im Vorklärbecken verbunden ist.

- 5 -

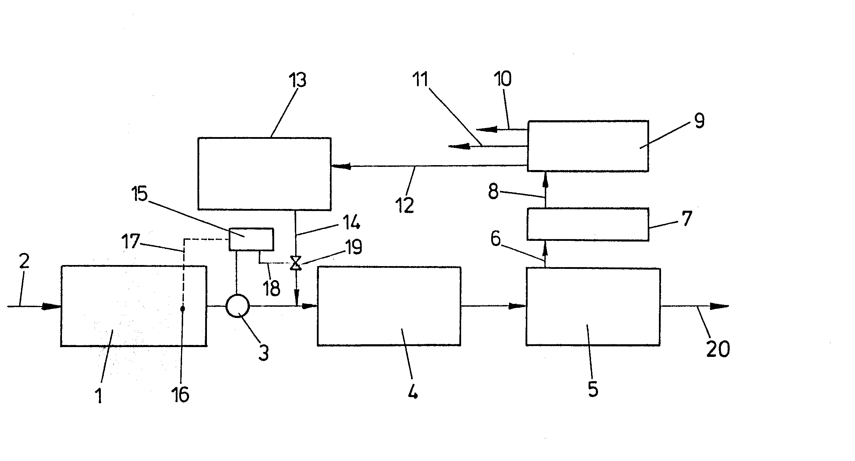

Die Erfindung wird nachfolgend anhand eines in der Zeichnung schematisch dargestellten Ausführungsbeispieles näher erläutert.

In der Zeichnung ist mit 1 ein Vorklärbecken bezeichnet, welchem über eine Leitung 2 das Abwasser einer Mischkanalisation zugeführt wird. Die anfallende Wassermenge wird einer Durchflußmengenmessung bei 3 unterworfen, wobei diejenige Menge, welche in der nachfolgenden biologischen Stufe, welche mit 4 bezeichnet ist, aufgearbeitet werden kann, dieser biologischen Stufe zugeführt wird. Das auf diese Weise biologisch abgebaute und weitgehend gereinigte Material gelangt in ein Nachklärbecken 5, aus welchem der Schlamm über eine Austragvorrichtung 6 einer Eindickung und Entwässerung, beispielsweise durch Siebband- oder Filterbandpressen, wie sie mit 7 bezeichnet sind, unterworfen wird. Der entstehende Schlammkuchen wird durch eine Fördervorrichtung 8 einem Reaktor für die thermische Zersetzung, beispielsweise einem Konvertierungsreaktor 9, zugeführt, in welchem auch eine weitgehende Trocknung erfolgt. Aus diesem Reaktor 9 werden über eine Austragsvorrichtung 10 feste Bestandteile, wie Kohle, und über eine Leitung 11 flüssige Öle ausgetragen. Das entstehende Prozeßwasser wird über eine Leitung 12 einem gasdichten Sammelbehälter 13 zugeführt, aus welchem es über eine Leitung 14 wieder abgezogen werden kann.

Mit 15 ist eine Regelschaltung bezeichnet, welcher die Signale der Durchflußmengenmessung bei 3 zugeführt sind. Zusätzlich kann dieser Regelschaltung ein Trübungssensor 16 zugeordnet sein, welcher über eine Signalleitung 17 mit dieser Regelschaltung 15 verbunden sein kann. Über eine Steuerleitung 18 wird das Dosierventil 19 geöffnet oder geschlossen, wobei das Öffnen und Schließen in Abhängigkeit von der gemessenen Durchflußmenge immer dann erfolgt, wenn es sich um eine Mischkanalisation handelt. Anstelle der Durchflußmengenmessung bei 3 kann eine Förderpumpe mit variablem Fördervolumen vorgesehen sein, und anstelle des Dosierventiles 19 kann ebenso eine variable Förderpumpe angeordnet werden, ohne daß hiebei der prinzipielle Aufbau geändert wird.

Das Prozeßwasser wird somit im Kreislauf geführt, wodurch die Geruchsbelästigung wesentlich verringert wird. Vom Nachklärbecken wird entsprechend gereinigtes Wasser über eine Leitung 20 abgezogen und dem Vorfluter zugeleitet.

Patentansprüche:

1. Verfahren zum Aufarbeiten von Prozeßwasser aus einer thermischen Zersetzung von organischen Substanzen, insbesondere aus Pyrolyse- bzw. Konvertierungsanlagen, dadurch gekennzeichnet, daß das Prozeßwasser einem gasdichten Sammelbehälter (13) zugeführt wird und aus diesem Sammelbehälter (13) einer biologischen Abwasserreinigungsstufe (4) zudosiert wird.

2. Verfahren nach Anspruch 1, dadurch gekennzeichnet, daß das Prozeßwasser in einer Menge, welche der Nährstoffkonzentration des Abwassers umgekehrt proportional ist, der biologischen Abwasserreinigungsstufe (4) zudosiert wird.

3. Verfahren nach Anspruch 1 oder 2, dadurch gekennzeichnet, daß in Abwasserreinigungsanlagen im Zuge einer Mischkanalisation die der Abwasserreinigungsanlage zufließende Abwassermenge gemessen wird und daß das Prozeßwasser in einer zur Zuflußmenge proportionalen Menge der biologischen Abwasserreinigungsstufe (4) zudosiert wird.

4. Verfahren nach einem der Ansprüche 1, 2 oder 3, dadurch gekennzeichnet, daß die Prozeßwassermenge in Abhängigkeit von der der biologischen Abwasserreinigungsstufe (4) in der Zeiteinheit zugeführten Abwassermenge geregelt wird.

5. Verfahren nach einem der Ansprüche 1 bis 4, dadurch gekennzeichnet, daß die Zudosierung zur biologischen Abwasserreinigungsstufe (4) so erfolgt, daß die Nährstoffkonzentration bei kontinuierlichem Beschicken der biologischen Abwasserreinigungsstufe (4) konstant gehalten wird.

6. Vorrichtung zur Durchführung des Verfahrens nach einem der Ansprüche 1 bis 5, dadurch gekennzeichnet, daß an die Prozeßwasserableitung (12) eines Konvertierungs- oder Pyrolysereaktors (9) ein gasdichter Sammelbehälter (13) angeschlossen ist, daß der Sammelbehälter (13) über eine Leitung (14) unter Zwischenschaltung einer regelbaren Förderpumpe und/oder eines regelbaren Dosierventiles (19) mit der Zuleitung zur biologischen Abwasserreinigungsstufe (4) einer Abwasserreinigungsanlage verbunden ist, daß in die Leitung zur biologischen Reinigungsstufe eine weitere Pumpe mit veränderlichem Fördervolumen und/oder ein Durchflußmengenmesser (3) eingeschaltet ist und daß der Antrieb der Förderpumpe(n) und/oder der Durchflußmengenmesser (3) und/oder der Stellantrieb des Dosierventils (19) mit einer Regelschaltung (15) verbunden sind.

7. Vorrichtung nach Anspruch 6, dadurch gekennzeichnet, daß die Regelschaltung (15) mit Signalleitungen für die Meßwerte einer Konzentrationsbestimmung der Nährstoffkonzentration im zufließenden Abwasser und/oder den Signalleitungen von Trübungssensoren (16) im Vorklärbecken (1) verbunden ist.

0144305

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | CHEMICAL ABSTRACTS, Band 74, Nr.10 8. März 1971, Seite 210,211. Nr. 45387a, COLUMBUS, OHIO, (US). N.P. DROZDOV et al.: "Purification of a complex mixture of waste waters from a wood-chemical industrial complex".<br><br>& Gidroliz. Lesokhim. Prom. 1970, 23(8), 3-4.<br><br>--- | 1 | C 02 F   3/12<br>G 05 D 21/02 |
| Y | BBC-NACHRICHTEN, Band 58, Nr.6/7, 1976, Seiten 232-238, BROWN-BOVERI , MANNHEIM, (DE). J. LENSCHOW: "Prozessführung und Informationsverarbeitung in Kläranlagen".<br><br>* Seite 235, Absatz:"Ausgleich der Schmutzfracht"; Seite 237, Absatz: "Steuerung der biologischen  Stufe". *<br><br>--- | 1-7 | |
| Y | FR-A-2 318 116 (SULZER FRERES SOCIETE ANONYME)<br><br>* Seite 21, Ansprüche 1,8,12 *<br><br>--- | 1-7 | **RECHERCHIERTE SACHGEBIETE (Int. Cl 4)**<br><br>C 02 F<br>G 05 D |
| Y | DE-A-2 909 333 (LINDE AG)<br><br>* Seite 1, Ansprüche 1,2,6-8 *<br><br>---<br><br>-/- | 1-7 | |

Der vorliegende Recherchenbericht wurde für alle Patentansprüche erstellt.

| Recherchenort | Abschlußdatum der Recherche | Prüfer |
|---|---|---|
| DEN HAAG | 04-03-1985 | TEPLÝ |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument ·
L : aus andern Gründen angeführtes Dokument

& : Mitglied der gleichen Patentfamilie, übereinstimmendes Dokument

EPA Form 1503 03 82

0144305

Nummer der Anmeldung

EP 84 89 0214
Seite 2.

# Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | FR-A-2 422 602 (SOCIÉTE GENÉRALE POUR LES TECHNIQUES NOUVELLES) <br><br> * Seite 1, Zeile 1 - Seite 2, Zeile 5; Seite 5, Ansprüche 1,6,8 * <br><br> --- | 1 | |
| A | EP-A-0 033 930 (SCHERING AG) <br><br> * Seiten 1,2 * <br><br> ----- | 1-7 | |

RECHERCHIERTE SACHGEBIETE (Int. Cl. 4)

Der vorliegende Recherchenbericht wurde für alle Patentansprüche erstellt.

| Recherchenort | Abschlußdatum der Recherche | Prüfer |
|---|---|---|
| DEN HAAG | 04-03-1985 | TEPLÝ |